# EUROPEAN PATENT SPECIFICATION

(11) **EP 2 792 281 B1**
(45) Date of publication and mention of the grant of the patent: **11.05.2016**
(21) Application number: 14164507.7
(22) Date of filing: 11.04.2014
(51) Int. Cl.: A47J 31/06

(54) **Capsule or pod adaptor for an infusion group**
Kapseladapter für eine Brühgruppe
Adapteur de capsule pour une unité d'infusion

(30) Priority: 16.04.2013 IT BS20130054
(43) Date of publication of application: 22.10.2014
(73) Proprietor: Capitani S.r.l., 22070 Solbiate (CO) (IT)
(72) Inventor: Capitani, Gionata, I-22070 Solbiate, Como (IT)
(74) Representative: Chimini, Francesco

(56) References cited:
- EP-A1- 0 468 080
- EP-A1- 2 401 945
- WO-A1-2012/156167
- DE-A1-102010 027 522
- DE-U1- 29 825 233
- US-A1- 2013 001 251

## Description

The present invention relates to infusion groups for the production of infused drinks such as coffee, tea, herb teas, chocolate etc. from a capsule or pod containing an aromatic substance, and refers in particular to a capsule adaptor for said infusion groups.

Various infusion groups are known of, in particular for coffee machines, for example for domestic use. Such groups usually comprise a male infusor, which supplies an extraction fluid, for example water, and a female infusor, suitable to co-operate with the male infusor. The capsule or pod containing the aromatic essence is inserted, according to various methods, inside the female infusor, which in practice defines, at least partially, an infusion chamber, in such a way that the extraction of the aromatic substance takes place when said infusion chamber is closed by the male infusor.

The infusion chamber is in communication with at least one exit duct of the infused drink, ending with a nozzle or exit hopper of the drink.

Generally speaking, the female infusor of an infusion group is sized depending on the given pod or capsule, or vice versa, so that the relative infusion group can only function correctly with that pod or capsule, for example produced by the manufacturer of the machine. In fact, it is known that the biggest source of profit for the manufacturers of coffee or other drinks machines is not so much the machine in itself, as the pods or capsules containing the aromatic substance, millions of which are consumed every year. Machine manufacturers therefore aim to force the buyer of a specific brand of machine to only use capsules or pods compatible with such machine. On the other side, however, the end user has an interest in being free of the machine manufacturer and thus able to use pods or capsules made by other manufacturers, for example, ones which are more affordable or containing different aromatic substances.

For example, only some manufacturers are able to provide in fully biodegradable or compostable capsules in paper material. It is evident that the use of such capsules, which should obviously be encouraged, is limited by the fact that such manufacturers cannot produce capsules compatible with all the machines of the better known brands.

In addition, some aromatic substances for making infused drinks other than coffee are contained in capsules having a different form and shape from coffee capsules, and cannot therefore be used in machine the infusion chamber of which has been designed exclusively to receive coffee capsules. A known device for adapting a food capsule into a capsule holder is disclosed in document EP2401945A1.

The aim of the present invention is to overcome the drawbacks spoken of above with reference to the infusion groups of the prior art.

In particular, one object of the invention is to make an infusion group utilisable with pods or capsules of different shapes and/or dimensions.

A further obj ect of the invention is to adapt an infusion group functioning with traditional plastic capsules to use with capsules made from paper material.

Such objects are achieved by an adaptor according to claim 1, with an infusion group according to claim 13 and with a kit according to claim 14. The dependent claims describe preferred embodiments of the adaptor.

The characteristics and advantages of the invention will, in any case, be evident from the description given below of its preferred embodiments, made by way of a non-limiting example with reference to the appended drawings, wherein:
- Figures 1 and 2 show schematically and from two different angles, part of an infusion group according to the invention;
- Figures 3, 4 and 5 show, in a perspective view, a female adaptor of an adaptor according to the invention, in as many embodiments;
- figure 6 shows, in a perspective view, an alternative embodiment of an infusion group according to the invention;
- figure 7 is an axial cross-section of a female adaptor of an adaptor according to the invention, in a further embodiment;
- Figures 8 and 8a are respectively an elevation view and plan view from above of a female adaptor in a further embodiment; and
- figure 9 is an elevation view of a female adaptor in a further embodiment.

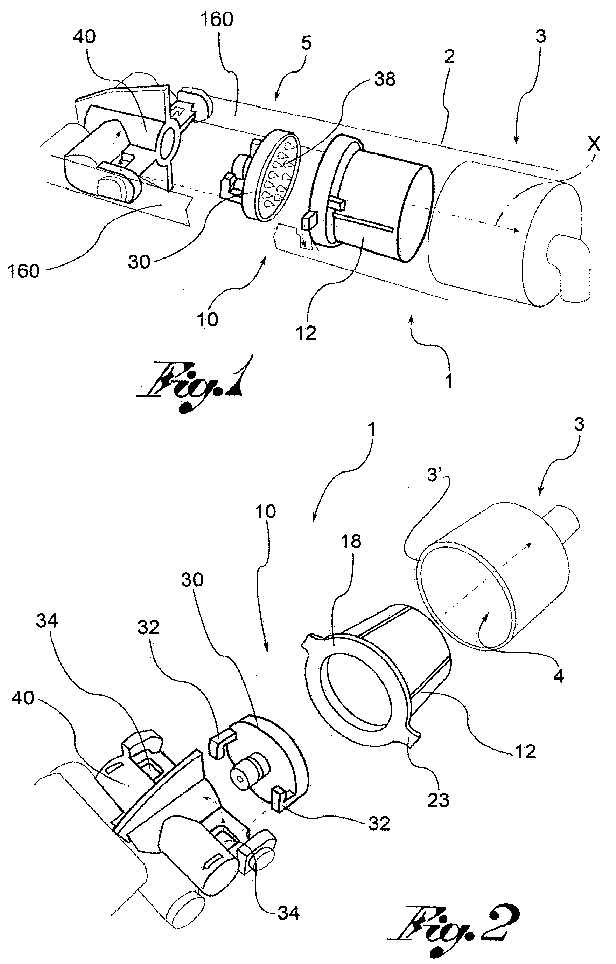

With reference to the figures 1, 2 and 6, reference numeral 1; 100 globally denotes an infusion group for machines of the type functioning with capsules or pods containing aromatic essences.

Generally speaking, the infusion group 1;100 comprises a female infusor 3; 103 which defines an infusion chamber 4; 104 suitable to house a pod or capsule for making an infused drink, and a male infusor 5; 105 suitable to co-operate with the female infusor 3; 103 to at least partially close said chamber 4; 104.

The female infusor 3; 103 and male infusor 5; 105 are supported by a frame 2; 102.

At least one of said male 5; 105 and female 3; 103 infusors is a mobile infusor. The mobile infusor, which in the preferred embodiment examples shown is the male infusor 5; 105, is movable between an open position and a closed position of the infusion chamber 4; 104.

In one embodiment variation shown for example in figures 1 and 2, the frame 2 has a parallelepiped box-structure which extends mainly along a main axis X, which in a preferred embodiment may be assumed to be horizontal.

For example, the frame 2 comprises two lateral plates 160 opposite each other and parallel to the main axis X. The male infusor and the female infusor are placed between and supported by said lateral plates 160.

The mobile infusor is translatable in relation to the other along a translation axis, coinciding or parallel to the main axis X of the frame.

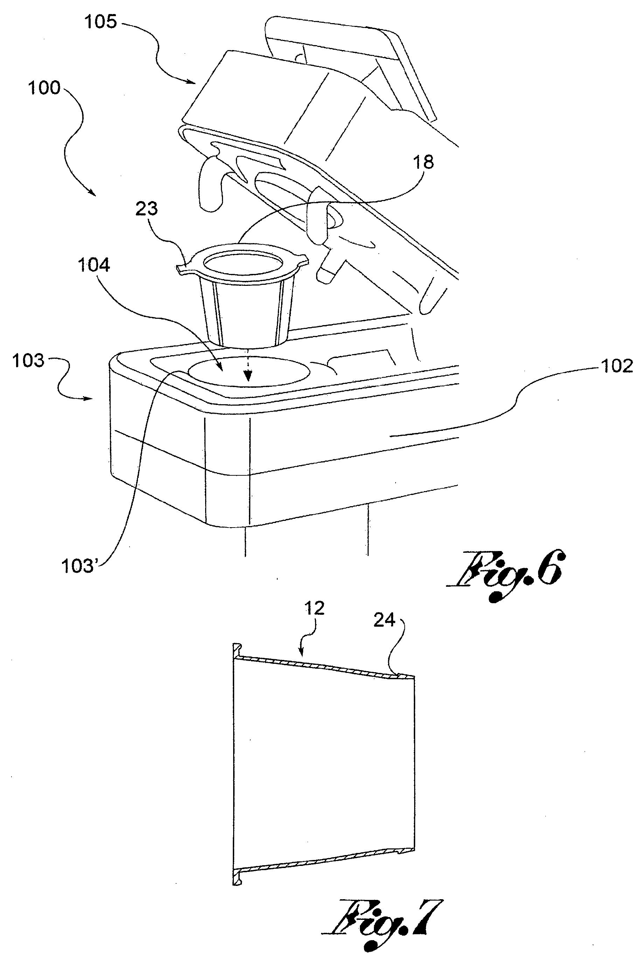

In one embodiment variation shown for example in figure 6, the infusion group is of the vertical type. For example, the female infusor 103 is made in a fixed part of the frame while the male infusor 105 is made in a mobile part, hinged to the fixed part so as to be rotatable between a lowered closed position of the infusion chamber 104 and a raised open position of said chamber 104..

In the examples shown therefore, the mobile infusor is the male infusor 5; 105, but it will appear evident to a person skilled in the art that the teaching provided by the present invention may also be easily applied in the case in which the mobile infusor is the female infusor 3; 103 or the case in which both infusors are mobile towards one another.

According to one aspect of the invention, an adaptor 10 comprising at least one female adaptor 12 suitable for inserting in the female infusor 3; 103 and suitable for receiving a pod or capsule is applicable to the infusion group 1; 100. Said capsule or pod suitable for inserting in the female adaptor 12 may be of a smaller size than the pod or capsule designed for said female infusor, or, as described further below, may be the same size but utilisable with a different infusion technique.

In other words, in the first case the female adaptor 12 is suitable for receiving a pod or capsule which could not be used with the female infusor 3;103 inasmuch as too small for said female infusor; the assembly composed of the female adaptor 12 and of the pod or capsule contained therein is instead suitable for being inserted in the inner cavity of the female infusor 3; 103, namely in the infusion chamber, so as to make the infusion group function correctly with such pod or capsule of a smaller size.

For example, said female adaptor 12 of the adaptor 10 has a cylindrical or truncated-cone body with a lesser diameter and/or depth than that of the female infusor 3; 103 which it is suitable for being inserted in.

In the second case, the adaptor 10 performs the function of permitting the use of a different infusion technique from that originally foreseen for the infusion group.

According to one aspect of the invention, said female adaptor 12 has a bottom wall 12a in which perforation and/or filtering means are made, for example a plurality of perforation points 13, for a use of the adaptor element 10 with capsules or pods in paper material or in any case without holes for the infusion and extraction of the drink. Such capsules could not be used with an infusion group having a female infusor without such perforation means.

According to the invention, said female adaptor 12 has a bottom wall 12b provided with a sealing valve element 15 at the exit aperture of the drink. Said sealing valve element 15 is suitable to open to permit the transit of the infused drink when the pressure of said drink in the female adaptor 12 exceeds a predefined threshold value. The presence of such sealing valve element helps to improve the mixing of the aromatic substance with infusion liquid and thus the quality of the drink.

According to another aspect of the invention, the female adaptor 12 has a bottom wall 12c from which at least two separate exit ducts extend 16; 17 for the dispensing of respective infused drinks. Advantageously, such exit ducts 16, 17 may be selectable depending on the substance contained in the capsule or pod, for example by means of a selector device of the type described in the patent application no. BS2013A000042 in the name of the same Applicant, currently not yet published, so as not to alter or contaminate the drink extracted with residues of a different aromatic substance deriving from a previous infusion.

In one embodiment, said end walls 12a, 12b and 12c are detachable and interchangeable.

According to a further aspect of the invention, the female adaptor 12 has a peripheral rim 18 abutting on the front rim 3'; 103' of the female infusor 3; 103.

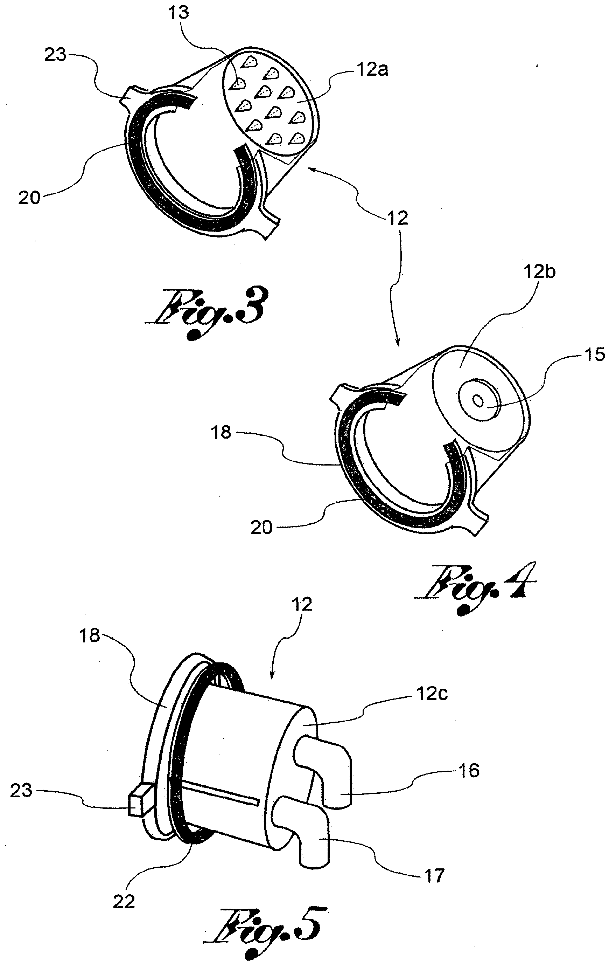

In one embodiment, said peripheral rim 18 has a front annular sealing element 20 placed on the front side (figures 3-4) to act in conjunction with the male infusor 5; 105.

In one embodiment, said peripheral rim 18 has a rear annular sealing element 22 placed on the rear side thereof to act in conjunction with said front rim 3'; 103' of the female infusor 3; 103 (figure 5).

Such annular sealing elements 20, 22 ensure the hermetic closure of the infusion group 1; 100 even in the presence of the adaptor 10. Naturally, the peripheral rim 18 of the female adaptor 12 may be provided with both sealing elements, front 20 and rear 22.

In general, the rear annular sealing element 22 is shaped depending on the shape of the front rim of the female infusor, so as to ensure the sealed coupling thereof. For example, said rear annular sealing element 22 is suitable to couple geometrically with said front rim. In one embodiment, the rear annular sealing element 22 has the shape of an O-ring or of a ring with an L cross-section.

In one embodiment, the front 20 and/or rear annular sealing element 22 is attached to the rim of the female adaptor 12 of the adaptor 10 by means of an adhesive or by welding or by pressing or flattening or by a combination of these methods.

In one embodiment variation, the front 20 and/or rear annular sealing element 22 is applied to the rim of the female adaptor 12 of the adaptor 10 in viscous or liquid form and is subsequently made to solidify.

In a further embodiment, the rear annular sealing element is made in one piece with the peripheral rim 18, for example by moulding.

However, thanks to the presence of one or of both annular sealing elements 20, 22 when the group is closed, all the infusion liquid coming from the male infusor 5; 105 crosses the capsule or pod, mixing with the aromatic substance, and is forced to enter one of the exit ducts.

According to one aspect of the invention, the female adaptor 12 is provided with radial gripping projections 23, for example which extend from the peripheral rim 18, which allow easy handling of the female adaptor 12 and in particular the manual extraction of the female infusor without coming into contact with the used capsule or pod, for example when automatic expulsion systems are not provided.

In one embodiment, the female adaptor 12 is provided with snap coupling means suitable to detachably engage in the female infusor 3. For example, figure 7 shows a female adaptor 12 fitted on one of its side walls with at least one undercut 24 suitable to engage respective teeth - not shown- made in the female infusor 3.

In the case of the vertical machine shown in figure 6, the female adaptor 12 may be simply made to lie in the female infusor 105, for example with its peripheral rim 18.

According to one aspect of the invention, where
circumstances so require for example in the case of a pod or capsule of dimensions considerably different from those of the pod or capsule intended for the infusor group without the adaptor, the adaptor 10 further comprises a male adaptor 30 suitable to act in conjunction with the female adaptor 12 for the production of the infused drink. The male adaptor 30 is provided with releasable coupling means 32 for its detachable coupling to a support element 40 of the frame of the infusion group 1; 100, for example a mobile support element. For example, said releasable coupling means 32 comprise hooks suitable to engage corresponding apertures 34 made in the support element 40.

As may be noted from the drawings, in one embodiment, the male adaptor 30 is fitted with perforation tips 38 to perforate the front wall of the capsule or pod.

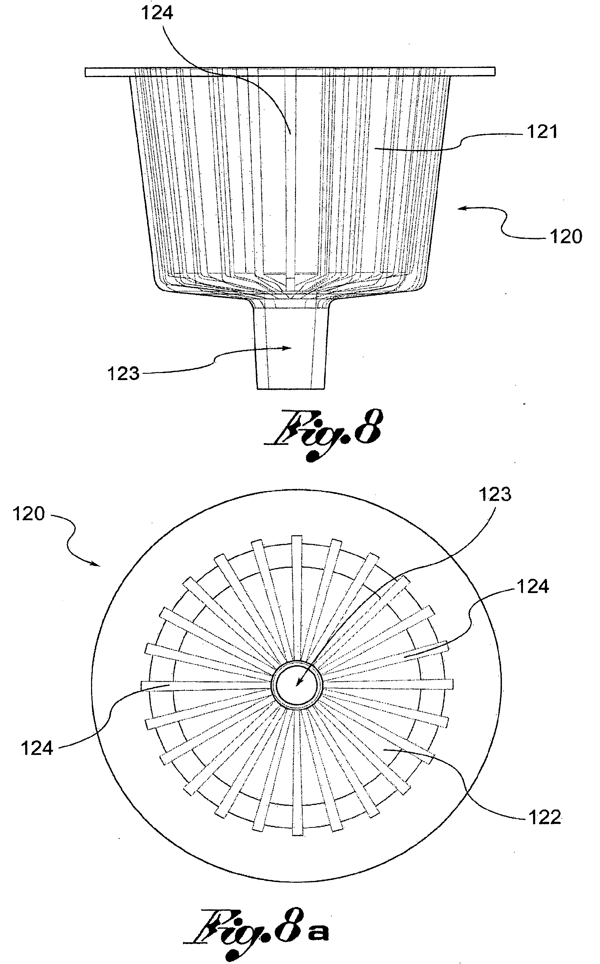

In another embodiment shown in figures 8 and 8a, the female adaptor 120 comprises a side wall 121, for example of a cylindrical or conical shape, inside which a plurality of grooves is made 124 suitable to make the infused drink flow towards an exit hole. Preferably, the female adaptor 120 has a bottom wall 122 in which an exit hole 123 for the infused drink is made, preferably in a central position. The grooves 124 preferably also extend in said bottom wall 122 so as to make the infused drink flow into said exit hole 123.

Such female adaptor 120 permits optimal functioning of the infusor group even with capsules having a cellulose filter wrapping. Thanks to the grooves 124, in fact, the infused drink may reach the exit hole 123. Without such grooves 124, instead, the capsule would adhere perfectly to the side wall of the adaptor preventing correct dispensing.

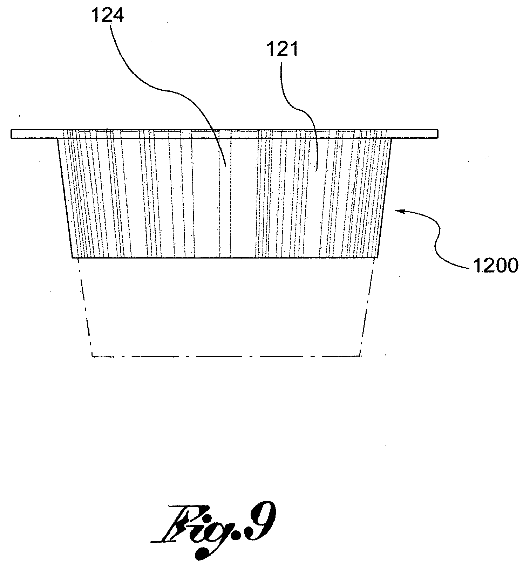

In one embodiment variation shown in figure 9, the female adaptor 1200 has a truncated-cone shape with a lesser depth than that of the capsule (shown by the dotted line). The female infusor 1200 may be provided with grooves 124 in this case also. In embodiment variant, the female adaptor 1200 adapts the diameter of the capsule to the diameter of the infusion chamber.

It is to be noted that in general, the female adaptor 12; 120; 1200 also performs a structural retention or support function, of a capsule in cellulose during the infusion. In the absence of the adaptor in fact a cellulose capsule could break when struck by the pressurised extraction liquid.

One aspect of the invention relates to a kit for making an infused drink, comprising an adaptor 10 as described above and at least one capsule or pod containing an aromatic substance, said capsule or pod being suitable to insert itself with a shaped coupling in the female adaptor 12; 120; 1200 of said adaptor 10.

Thanks to the adaptor 10 according to the invention therefore, it is possible to use for a given machine for making infused drinks capsules or pods other than those compatible with said machine. For example, the adaptor 10 makes it possible to reduce the depth and/or diameter of the infusion chamber which receives the capsule or pod and thus to obtain an optimal infusion with different types of capsules.

In particular, it is possible to use capsules in paper material.

Features described in relation to a specific aspect, embodiment or example of the invention must be understood as applicable to any other aspect, embodiment or example described herein unless incompatible therewith. All the features disclosed in this description (which comprise any appended claim, abstract and drawings), may be combined in any combination, except in the case in which at least some of such features are mutually exclusive. The invention is not limited to the details of any prior embodiment.

Moreover, a person skilled in the art may make modifications and variations to the embodiments of the adaptor and infusion group according to the invention, replacing elements with others functionally equivalent so as to satisfy contingent requirements while remaining within the scope of protection of the following claims. Each of the features described as belonging to a possible embodiment may be realised independently of the other embodiments described.

## Claims

1. Adaptor (10) applicable to an infusion group (1; 100) for making an infused drink starting from a capsule or pod containing an aromatic substance, where said infusion group comprises a female infusor (3; 103) suitable for receiving said pod or capsule, the adaptor (10) comprising at least one female adaptor (12; 120; 1200) suitable for inserting in said female infusor (3; 103) and suitable for receiving a pod or capsule,
**characterised in that** said female adaptor has a bottom wall (12b) provided with a sealing valve element (15), said valve element being suitable for opening to permit the transit of the infused drink when the pressure of said drink in the female adaptor exceeds a predefined threshold value.

2. Adaptor according to claim 1, wherein the female adaptor (12; 120; 1200) is suitable for receiving a pod or capsule of a smaller size than the pod or capsule designed for said female infusor.

3. Adaptor according to claim 2, wherein said female adaptor (12; 120, 1200) has a cylindrical or truncated-cone body with a lesser diameter and/or depth than that of the female infusor which it is suitable for being inserted in.

4. Adaptor according to any of the previous claims, wherein said female adaptor (12) has a bottom wall (12a) in which perforation and/or filtering means are made.

5. Adaptor according to any of the previous claims, wherein said female adaptor (12; 120; 1200) has a bottom wall (12c) from which at least two separate exit ducts extend (16; 17) for the dispensing of respective infused drinks.

6. Adaptor according to any of the previous claims, wherein the female adaptor (12; 120; 1200) has a peripheral rim (18) abutting on the front rim (3'; 103') of the female infusor (3; 103), said peripheral rim (18) having a front annular sealing element (20) placed on the front side to act in conjunction with a male infusor (5; 105; 30) suitable for coupling to the female infusor.

7. Adaptor according to any of the previous claims, wherein the female adaptor ((12; 120; 1200) has a peripheral rim (18) abutting on the front rim of the female infusor, said peripheral rim having a rear annular sealing element (22) placed on the rear side to act in conjunction with said front rim of the female infusor.

8. Adaptor according to any of the previous claims, wherein said female infusor is provided with radial gripping projections (23).

9. Adaptor according to any of the previous claims, wherein said female adaptor is provided with snap coupling means (24) suitable to detachably engage in the female infusor.

10. Adaptor according to any of the previous claims, wherein the female adaptor (120; 1200) has a side wall on the inner side of which a plurality of grooves is made (124) suitable to make the infused drink flow towards an exit hole.

11. Adaptor according to the previous claim, wherein the female adaptor (120) has a bottom wall in which said exit hole is, said grooves also being made in said bottom wall.

12. Adaptor according to any of the claims 1-11, further comprising a male adaptor (30) suitable for co-operating with the female adaptor (12; 120; 1200) for the production of the infused drink, said male adaptor being provided with releasable coupling means (32) for its detachable coupling to a support element (40) of the frame of an infusion group.

13. Infusion group for making an infused drink starting from a capsule or pod containing an aromatic substance, comprising a female infuser suitable for receiving said pod or capsule and an adaptor according to any of the previous claims.

14. Kit for making an infused drink, comprising an adaptor according to any of the claims 1-12 and at least one capsule or pod containing an aromatic substance, said capsule or pod being suitable for inserting itself with a shaped coupling in said adaptor.

## Patentansprüche

1. Adapter (10), anwendbar auf eine Aufgussgruppe (1; 100) zur Herstellung eines Aufgussgetränks ausgehend von einer Kapsel oder Hülse enthaltend eine aromatische Substanz, wobei die Aufgussgruppe ein weibliches Aufgussstück (3; 103) umfasst, welches zur Aufnahme der Hülse oder Kapsel geeignet ist, wobei der Adapter (10) wenigstens einen weiblichen Adapter (12; 120; 1200) geeignet zum Einsetzen in das weibliche Aufgussstück (3; 103) und geeignet zur Aufnahme einer Hülse oder Kapsel umfasst,
**dadurch gekennzeichnet, dass** der weibliche Adapter eine untere Wand (12b) aufweist, bereitgestellt mit einem Sperrventilelement (15), wobei das Ventilelement zum Öffnen geeignet ist, um den Durchgang des Aufgussgetränks zu erlauben, wenn der Druck des Getränks im weiblichen Adapter einen vorbestimmten Schwellenwert übersteigt.

2. Adapter nach Anspruch 1, wobei der weibliche Adapter (12; 120; 1200) geeignet ist, um eine Hülse oder Kapsel von geringerer Größe aufzunehmen als die Hülse oder Kapsel, welche für das weibliche Aufgussstück entworfen worden ist.

3. Adapter nach Anspruch 2, wobei der weibliche Adapter (12; 120; 1200) einen zylindrischen oder kegelstumpfförmigen Körper mit geringerem Durchmesser und/oder Tiefe als die des weiblichen Aufgussstücks aufweist, wobei er geeignet ist, dass er darin eingesetzt wird.

4. Adapter nach einem der vorhergehenden Ansprüche, wobei der weibliche Adapter (12) eine untere Wand (12a) aufweist, in welche ein Perforations- und/oder Filtermittel gemacht ist.

5. Adapter nach einem der vorhergehenden Ansprüche, wobei der weibliche Adapter (12; 120; 1200) eine untere Wand (12c) aufweist, von welcher wenigstens zwei getrennte Gänge (16; 17) zum Verteilen der jeweiligen Aufgussgetränke abgehen.

6. Adapter nach einem der vorhergehenden Ansprüche, wobei der weibliche Adapter (12; 120; 1200) einen peripheren Rand (18) aufweist, welcher an den vorderen Rand (3'; 103') des weiblichen Aufgussstücks (3; 103) grenzt, wobei der periphere Rand (18) ein vorderes ringförmiges Abdichtelement (20) aufweist, welches auf der Vorderseite angeordnet ist, um zusammen mit einem männlichen Aufgussstück (5; 105; 30) zu wirken, welches zum Kuppeln an das weibliche Aufgussstück geeignet ist.

7. Adapter nach einem der vorhergehenden Ansprüche, wobei der weibliche Adapter (12; 120; 1200) einen peripheren Rand (18) aufweist, welcher an den vorderen Rand des weiblichen Aufgussstücks grenzt, wobei der periphere Rand (18) ein hinteres ringförmiges Abdichtelement (22) aufweist, welches auf der Rückseite angeordnet ist, um zusammen mit dem vorderen Rand des weiblichen Aufgussstücks zu wirken.

8. Adapter nach einem der vorhergehenden Ansprüche, wobei das weibliche Aufgussstück mit radialen Greifansätzen (23) bereitgestellt ist.

9. Adapter nach einem der vorhergehenden Ansprüche, wobei der weibliche Adapter mit einem Schnappkupplungsmittel (24) bereitgestellt ist, welches zum abtrennbaren Eingreifen in das weibliche Aufgussstück geeignet ist.

10. Adapter nach einem der vorhergehenden Ansprüche, wobei der weibliche Adapter (120; 1200) eine Seitenwand aufweist, auf deren innerer Seite eine Vielzahl von Rillen (124) gemacht ist, welche geeignet sind, um das Aufgussgetränk zu einem Ausgangsloch fließen zu lassen.

11. Adapter nach dem vorhergehenden Anspruch, wobei der weibliche Adapter (120) eine untere Wand aufweist, in welcher das Ausgangsloch ist, wobei Rillen auch in die untere Wand gemacht sind.

12. Adapter nach einem der Ansprüche 1-11, weiterhin umfassend einen männlichen Adapter (30), welcher geeignet ist, mit dem weiblichen Adapter (12; 120; 1200) zur Herstellung eines Aufgussgetränks zusammen zu wirken, wobei der männliche Adapter mit einem lösbaren Kupplungsmittel (32) zu seiner abtrennbaren Kupplung an ein Trägerelement (40) des Rahmens einer Aufgussgruppe bereitgestellt ist.

13. Aufgussgruppe zur Herstellung eines Aufgussgetränks ausgehend von einer Kapsel oder Hülse enthaltend eine aromatische Substanz, umfassend ein weibliches Aufgussstück, welches zur Aufnahme der Hülse oder Kapsel geeignet ist, und einen Adapter nach einem der vorhergehenden Ansprüche.

14. Kit zur Herstellung eines Aufgussgetränks, umfassend einen Adapter nach einem der Ansprüche 1-12 und wenigstens eine Kapsel oder Hülle enthaltend eine aromatische Substanz, wobei die Kapsel oder Hülle geeignet ist, um sich mit einer geformten Kupplung in den Adapter einzusetzen.

## Revendications

1. Adaptateur (10) applicable à un groupe d'infusion (1 ; 100) pour faire une boisson infusée à partir d'une capsule ou coque contenant une substance aromatique, où ledit groupe d'infusion comprend un infuseur femelle (3 ; 103) adapté pour recevoir ladite coque ou capsule, l'adaptateur (10) comprenant au moins un adaptateur femelle (12 ; 120 ; 1 200) adapté pour s'insérer dans ledit infuseur femelle (3 ; 103) et adapté pour recevoir une coque ou capsule,
**caractérisé en ce que** ledit adaptateur femelle a une paroi inférieure (12b) dotée d'un élément de valve étanche (15), ledit élément de valve étant adapté pour s'ouvrir pour permettre le passage de la boisson infusée lorsque la pression de ladite boisson dans l'adaptateur femelle excède une valeur seuil prédéfinie.

2. Adaptateur selon la revendication 1, dans lequel l'adaptateur femelle (12 ; 120 ; 1 200) est adapté pour recevoir une coque ou capsule d'une plus petite taille que la coque ou capsule conçue pour ledit infuseur femelle.

3. Adaptateur selon la revendication 2, dans lequel ledit adaptateur femelle (12 ; 120 ; 1 200) présente un corps cylindrique ou tronconique avec un diamètre et/ou une profondeur inférieure à celle de l'infuseur femelle qui est adapté pour être inséré dedans.

4. Adaptateur selon l'une quelconque des revendications précédentes, dans lequel ledit adaptateur femelle (12) présente une paroi inférieure (12a), dans laquelle des moyens de perforation et/ou de filtration sont réalisés.

5. Adaptateur selon l'une quelconque des revendications précédentes, dans lequel ledit adaptateur femelle (12 ; 120 ; 1 200) présente une paroi inférieure (12c), de laquelle au moins deux conduits de sortie séparés (16 ; 17) s'étendent pour la distribution de boissons infusées respectives.

6. Adaptateur selon l'une quelconque des revendications précédentes, dans lequel l'adaptateur femelle (12 ; 120 ; 1 200) présente un bord périphérique (18) butant contre le bord avant (3' ; 103') de l'infuseur femelle (3 ; 103), ledit bord périphérique (18) présentant un élément étanche annulaire avant (20) placé sur le côté avant pour agir conjointement avec un infuseur mâle (5 ; 105 ; 30) adapté pour le couplage avec l'infuseur femelle.

7. Adaptateur selon l'une quelconque des revendications précédentes, dans lequel l'adaptateur femelle (12 ; 120 ; 1 200) présente un bord périphérique (18) butant contre le bord avant de l'infuseur femelle, ledit bord périphérique présentant un élément étanche annulaire arrière (22) placé sur le côté arrière pour agir conjointement avec ledit bord avant de l'infuseur femelle.

8. Adaptateur selon l'une quelconque des revendications précédentes, dans lequel ledit infuseur femelle est doté de saillies de saisie radiales (23).

9. Adaptateur selon l'une quelconque des revendications précédentes, dans lequel ledit adaptateur femelle est doté de moyens de couplage par enclenchement (24) adaptés pour s'engager de manière détachable dans l'infuseur femelle.

10. Adaptateur selon l'une quelconque des revendications précédentes, dans lequel l'adaptateur femelle (120 ; 1 200) présente une paroi latérale, sur le côté intérieur de laquelle est réalisée une pluralité de rainures adaptée (124) pour amener la boisson infusée à s'écouler vers un trou de sortie.

11. Adaptateur selon la revendication précédente, dans lequel l'adaptateur femelle (120) présente une paroi inférieure, dans laquelle se trouve ledit trou de sortie, lesdites rainures étant aussi réalisées dans ladite paroi inférieure.

12. Adaptateur selon l'une quelconque des revendications 1 à 11, comprenant en outre un adaptateur mâle (30) adapté pour coopérer avec l'adaptateur femelle (12 ; 120 ; 1 200) pour la production de la boisson infusée, ledit adaptateur mâle étant doté de moyens de couplage détachable (32) pour son couplage détachable avec un élément de support (40) du cadre d'un groupe d'infusion.

13. Groupe d'infusion pour faire une boisson infusée à partir d'une capsule ou coque contenant une substance aromatique, comprenant un infuseur femelle adapté pour recevoir ladite coque ou capsule et un adaptateur selon l'une quelconque des revendications précédentes.

14. Kit pour faire une boisson infusée, comprenant un adaptateur selon l'une quelconque des revendications 1 à 12, et au moins une capsule ou coque contenant une substance aromatique, ladite capsule ou coque étant adaptée pour s'insérer elle-même avec un couplage formé dans ledit adaptateur.
